# EUROPEAN PATENT APPLICATION

(11) **EP 1 077 435 A1**
(43) Date of publication of application: **21.02.2001**
(21) Application number: 00202803.3
(22) Date of filing: 08.08.2000
(51) Int. Cl.: G07F 17/26, G07B 17/00

(54) **System for customizing and ordering personalized postage stamps**

(30) Priority: 19.08.1999 US 378159
(71) Applicant: EASTMAN KODAK COMPANY, Rochester, New York 14650 (US)
(72) Inventor: Patton, David L., Rochester, New York 14650-2201 (US); Tsaur, Allen K., Rochester, New York 14650-2201 (US)
(74) Representative: Nunney, Ronald Frederick Adolphe

(57) **Abstract**

A system and method for customizing and ordering an official postal product. The system includes a central authorizing computer system for communicating with at least one remote ordering system over a communication network. The central authorizing computer system having a computer program for forwarding information to the at least one remote ordering system for allowing customizing of an image for use in an official postal product from the at least one remote ordering system.

## Description

This invention relates to a system used for ordering and printing of customized official postage from a central authorizing computer and printing system.

U.S. Patent 5,666,215 discloses a method for viewing photographic images on a personal computer and enabling a consumer to select images for initial printing, reprinting and ordering related image products.

Images that can be used on a consumer's personal computer for prints and other services can be obtained from a variety of sources. For example, but not limited to, image files stored in digital format on floppy disks, Picture CDs, Photo CDs, CD-ROMs downloaded from the Internet, and negatives and prints scanned using the consumer's own scanner and displayed on their personal computer's display.

Images obtained from various sources are used in a number of different image products. One of those image products are so-called "sticker prints," which are images made on a print media having an adhesive base and arranged so that they can be peeled off and individually pasted onto another surface. However, these stickers are not used in situations which require that they be "authentic" such as postage stamps. For the purposes of this application, use of the term "authentic" means that the image product indicates with a high degree of certainty that the image product has been properly authorized for its intended use.

Currently, the official postage stamps are printed using a Gravure process. The Gravure process is capable of creating images of very high resolution, way beyond the capabilities of most common printers. The Gravure process is an intaglio process. It uses a depressed or sunken surface etched into a copper cylinder to create the image and the unetched surface of the cylinder represents non-printing areas. The cylinder rotates in a bath of ink and the etched area picks up the ink and transfers it to the media creating the image. Gravure printing is considered excellent for printing highly detailed marks or pictures. High cylinder making expense usually limits use of Gravure rollers to long printing runs.

The Gravure process described above for printing stamps does not lend itself to economically printing small batches of stamps in small quantities, for example, batches from about of 10 to 1000. Thus, providing a system which uses a Gravure printing system would not be economically suitable in a system which permits a consumer to choose an image and having a relatively small number of postal products made using that image. A second problem is that not every personal image is suitable for use as a postage stamp. That is to say, some images might be offensive, not appropriate, or otherwise not acceptable.

U.S. Patent No. 5,873,605 discloses creating a postage stamp using an electronic camera to capture an image of oneself via a vending machine. Likewise, European Patent Application No. 0 893 787, Basington et al, discloses producing a postage stamp using an electronic camera and a vending machine. There are several problems that are not addressed using these methods. The first problem is the user must go to the vending machine to produce the stamp. The second problem is that there is no method described for checking the content of the image to insure that the image captured is not offensive in nature, making it unsuitable for use as an official stamp. The third problem is it does not permit for creating a stamp from an image from other digital sources such as a file, print, negative, Photo CD, CD-ROM, or DVD.

U.S. Patent No. 4,725,718 discloses using an encrypted message based upon the postage amount and the mail address as a method to insure authenticity of the postage. U.S. Patent No. 4,831,555 discloses a postage applying system where the device used for printing of postage and the accounting unit are separated from one another by an unsecured link and the authenticity of the postage is insured by encryption. Both of these patents disclose printing of postage using a device such as an off-the-shelf printer. The postage printed is akin to postage printed using a postage meter. The postage indicia is applied using a one-color ink. When the postage is printed using an off-the-shelf printer and not a secured postage meter, an encryption scheme as described in the patents previously set forth is used. One of the characteristics of an official postage stamp printed by the government is how the inks used to print the stamp absorb and fluoresce when exposed to certain wavelengths of light. A typical official United States postage stamp is printed with inks that have a pigment when excited by ultraviolet light at a peak wavelength of 254 nanometers, phosphoresce in the visible (green) region of the spectrum with a peak wavelength of 526 nanometers. Current equipment in the post office is used for scanning of the postage for verifying that it is authentic postage. Inks that are used in an off-the-shelf type printer device do not typically contain pigments with these characteristics. Therefore, these off-the-shelf type printing devices are not suitable for the printing of a postage stamp. In addition, these indicia are typically very rudimentary, and are no more than line drawings. These printers also do not have means for insuring that the quality and detail are properly maintained to meet the standards required of an official postage stamp. Also, if a user or printer makes a mistake when printing the postage, the value of the stamp may be lost or difficult for the consumer to obtain reimbursement.

U.S. Patent No. 5,819,240 discloses printing a postage meter stamp, including the postage amount and a personalized postage indicia, onto a piece of mail. The personalized postage indicia can be created by the user or selected from a list of graphics supplied by the Post Office and placed on a postal storage device. Also disclosed is the use of two compatible computer programs, one that runs on a computer at the Post Office and a second that runs on the user's computer. There are several problems with the system and method disclosed. The first is that the postage is printed using a postage meter, which limits the postage printed to indicia consisting of one-color. Again, as mentioned above, these indicia are typically very rudimentary and are no more than line drawings. Another problem is the system requires the use of a postage meter type printing device and/or a postage storage device. The postage storage device needs to be taken to the Post Office to be interfaced with the computer at the Post Office so the postal employee can add additional postage and graphics to the memory of the device. The postal employee also enables the user to access the postage and graphics at the user's location. Finally the personalized indicia is typically printed in close proximity to the postage indicia, but is not actually part of the postage itself.

U.S. Serial No. 09/359,152, filed on July 22, 1999 entitled AUTHORIZING THE PRINTING OF DIGITAL IMAGES, by David L. Patton and Gustavo R. Paz-Pujalt, assigned to the Eastman Kodak Company, discloses a method of authorizing the making of customer selected images on a receiver, such as postage stamps, by a receiving agency. The method includes electronically transmitting a digital image file over a channel to a receiving agency; the digital image file which comprises at least one digital image and authorization information for making images on a receiving media. The method further includes receiving the digital image file at the receiving agency, displaying at least one received digital image and examining the displayed digital image to determine whether its contents are acceptable for making images, and examining the authorization information and printing at a designated location acceptable digital images on a receiver corresponding to the transmitted digital image when the authorization information is approved.

The present invention provides a method and system for customizing an official postal product that solves many of the problems of the prior art. The method and system also provides high quality images on official postal products having the required quality, characteristics, and content standards.

In accordance with one aspect of the present invention there is provided a system for customizing an official postal product, comprising:
a central authorizing computer system for communicating with at least one remote ordering system over a communication network, the central authorizing computer system having a computer program for forwarding information to the at least one remote ordering system for allowing customizing of an official postal product from the at least one remote ordering system.

In accordance with another aspect of the present invention there is provided a method for ordering custom postage having a customized image thereon, comprising the steps of:
a) providing a central authorizing computer system for communication with at least one remote ordering system over a communication network; and
b) providing the central authorizing computer system with a computer program for providing information to the at least one remote ordering system for allowing ordering of custom postage from the at least one remote ordering system.

In yet another aspect of the present invention there is provided a computer software product for use in ordering custom postage, comprising a computer readable storage medium having a computer program for use on a central authorizing computer system capable of communication with at least one remote ordering system over a communication network, the computer software product which when loaded into an authorizing computer system causes the authorizing computer system to perform the following step of:
providing the central authorizing computer system with a computer program for forwarding information to the at least one remote ordering system for allowing ordering of custom postage from the at least one remote ordering system.

In another aspect of the present invention there is provided a system for ordering customized postage, comprising:
a central authorizing computer system for communicating with at least one remote ordering system over a communication network, the central authorizing computer system having a computer program for forwarding information to the at least one remote ordering system for allowing custom modification of an image for use on postage.

In still another aspect of the present invention there is provided a system for customizing an official postal product, comprising:
a central authorizing computer system for communicating with at least one remote ordering system over a communication network, the central authorizing computer system having a computer program for forwarding information to the at least one remote ordering system for allowing customizing of an official postal product from the at least one remote ordering system, and means for manipulation of the image for use on the official postal product.

In another aspect of the present invention there is provided a system for customizing an official postal product, comprising:
a central authorizing computer system for communicating with at least one remote ordering system over a communication network, the central authorizing computer system having a computer program for forwarding information to the at least one remote ordering system for allowing customizing of an official postal product from the at least one remote ordering system, means for manipulation of the image for use on the official postal product, and means for producing an order receipt for order of a postal product, the receipt having an identification bar code thereon.

In yet another aspect of the present invention there is provided a system for customizing an official postal product, comprising:
a central authorizing computer system for communicating with at least one remote ordering system over a communication network, the central authorizing computer system having a computer program for forwarding information to the at least one remote ordering system for allowing customizing of an official postal product from the at least one remote ordering system, the central authorizing computer system having at least one prestored image that can be used in a custom official postal product, means for manipulation or use of at least a portion of the prestored image for use on the custom official postal product.

In another aspect of the present invention there is provided a system for customizing an official postal product, comprising:
a central authorizing computer system for communicating with at least one remote ordering system over a communication network, the central authorizing computer system having a computer program for forwarding information to the at least one remote ordering system for allowing customizing of an official postal product from the at least one remote ordering system, the central authorizing computer system having at least one prestored image that can be used in a custom official postal product, means for use of at least a portion of the prestored image for use on the custom official postal product thereby eliminating the need to obtain content approval before producing of the official postal product.

Fig. 1 is a schematic diagram of a system for remotely ordering an official postal product from a central authorizing system using a remote ordering system;
Fig. 2 is modified remote ordering system made in accordance with the present invention;
Figs. 3a and 3b together illustrate a block diagram of the operation of the remote ordering system and central authorizing system of Figs. 1 and 2; and
Figs. 4-20 illustrate various screens that are provided on a display device at the remote ordering system by the central authorizing system.

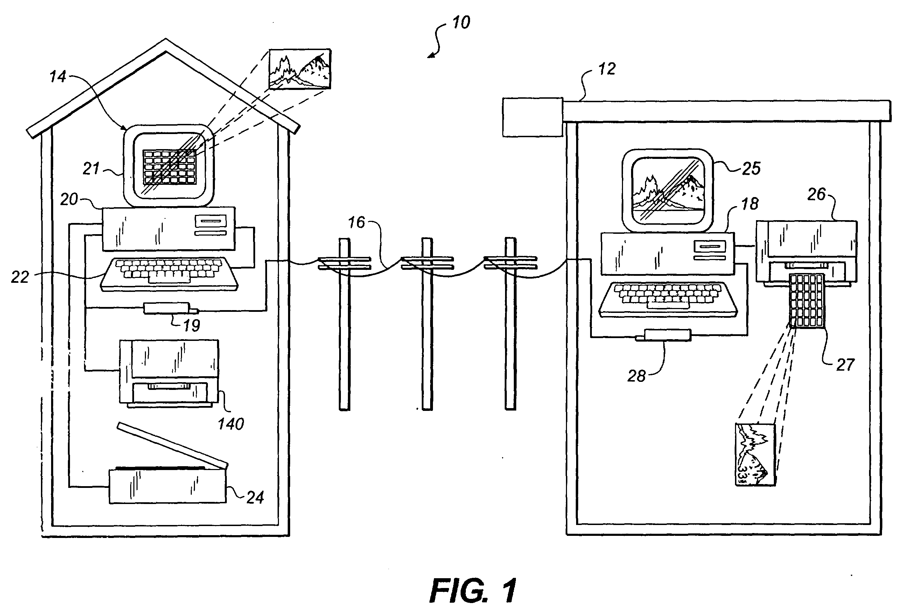

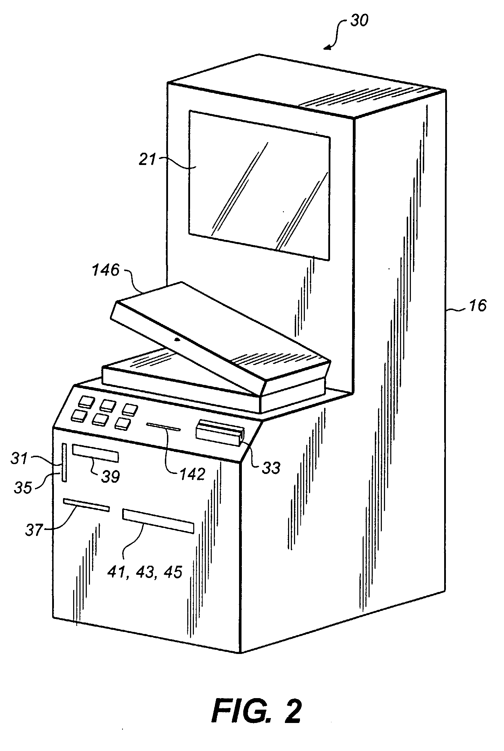

Referring now to Fig. 1, there is illustrated a system 10 for ordering customized postage via a central authorizing computer system 12 for communicating with at least one remote ordering system 14 over a communication network 16. The central authorizing computer system 12 includes a computer 18 having an appropriate means allowing the computer system 12 to forward information to a remote ordering system 14 and for allowing for the customizing of official postal products and/or for ordering of custom official postal products. For the purposes of the present invention, an "official postal product" means a product by itself, or as affixed to another product which shall be recognized as official postage which can be used to send items through the official governmental postal system. The remote ordering system 14 comprises a microprocessor 20 (such as a personal computer) having communication hardware 19 (such as a communication modem) and software and includes a display device 21 and appropriate data entry means 22 (such as a keyboard, mouse, etc.). In place of computer 20 an interactive TV device, kiosk 30 (Fig. 2), or other remote communication device may be used. The consumer accesses the central authorizing computer system 12 via the remote ordering system 14 at a consumer's location, for example, home, store, or business. Custom images that can be used by the remote computer system 14 for creating customized postal products, such as postage stamps 27, can be obtained from any desired source. For example, images can be obtained from image files stored in digital format on floppy and hard disks, Picture CDs, Photo CDs, and CD-ROMs, or can be a selection of images stored on the central authorizing computer system 12. Image files may also be downloaded from the Internet using a system such as Kodak's Photonet, or can be obtained from negatives and prints scanned using the consumer's own film or print scanner 24, or images from a digital camera (not shown). The consumer can also make a selection from images stored on the central authorizing computer system 12 that are made available to the consumer.

The central authorizing computer system 12, in addition to the server/computer 18, includes a communication link 28 (such as modem), a display device 25 and a printer 26 for printing of official postal products. The authorizing computer system 12 is preferably designed so that it can communicate with multiple remote ordering systems 14. Therefore, the computer 18 is provided with an appropriate mass memory device, hardware and computer software.

The central authorizing computer system 12 receives the image file and order information via a modem 28, records the image file and order information using a computer/server 18, and stores the image file and order information in a mass memory device. The computer system 12, through appropriate screens sent to the remote ordering system 14, leads the consumer through the steps necessary to create and order customized postage products. The computer system 12 checks the order information for completeness and validity, and communicates a receipt if the order is complete. If the order is incomplete or incorrect, an appropriate message is sent to the remote ordering system 14 so the user can make the appropriate correction. When using custom images provided by the consumer, proper authorization may be necessary to assure that the custom image is appropriate for use on a postal image product. Therefore, once the authorizing central computer system 12 receives the order, an order receipt is immediately sent to the remote ordering system. The receipt may include a receipt number that can be used for tracking of the order by the customer from the remote ordering system 14. Since it may be necessary for a person to review the custom image provided with the submitted order, it may take some time before final approval can be provided so that the order can be fulfilled. Once approval of the custom image is obtained for use on the postal product and the order is accepted, an acceptance notice is sent from the central authorizing computer system 12 to the remote ordering system 14.

The consumer does not need to use the remote ordering system 14 to determine if use of the custom image has been approved and the order accepted. Alternatively, the consumer can call a designated phone number, such as a toll free number, whereby the consumer can enter their unique receipt number to obtain the status of the order. The status information may advise whether or not the submitted order was approved, and if not approved, why it was not approved.

Referring now to Fig. 2, there is illustrated a modified remote order system 14 for ordering customized postage via a central authorizing computer system 12. In this embodiment, the remote ordering system 14 is a kiosk 30, which may be placed at a business establishment, such as a store, park venue, mall, or in a postal office, etc. The kiosk 30 includes many of the same components of the remote ordering system 14 of Fig. 1, like numerals indicating like parts and operation. The kiosk 30 would also have payment means 31 for receiving payment. For example, but not by way of limitation, a device for receiving credit cards and/or cash, or for accessing an established credit account. In the embodiment illustrated, the payment means comprises a credit card reader 33 and cash receiving mechanism 35. The microprocessor 20 in kiosk 30 is provided with the appropriate hardware and software for allowing communication with authorizing computer system 12. Any appropriate source of images may be used by the consumer for placement on customized postal products as previously discussed with respect to the embodiment of Fig 1. In the embodiment illustrated the kiosk 30 is provided with read devices 37,39,41,43,45 for accepting images stored in digital format on floppy disc, portable hard disks, Picture CDs, Photo CDs, and CD-ROMs, respectively. The kiosk 30 may also obtain images from any other desired source, for example, through an Internet connection provided on the kiosk 30. The kiosk 30 operates in the same manner as the system of Fig. 1.

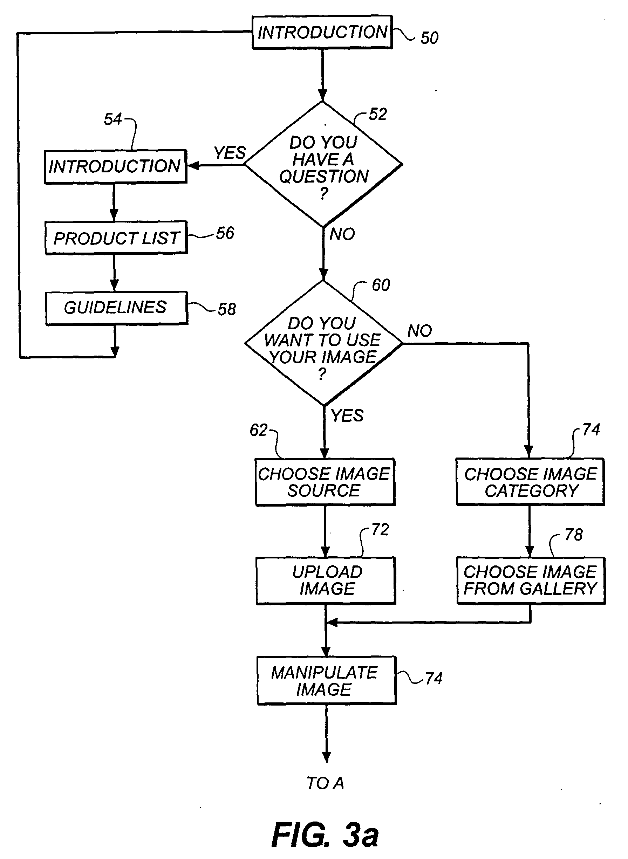

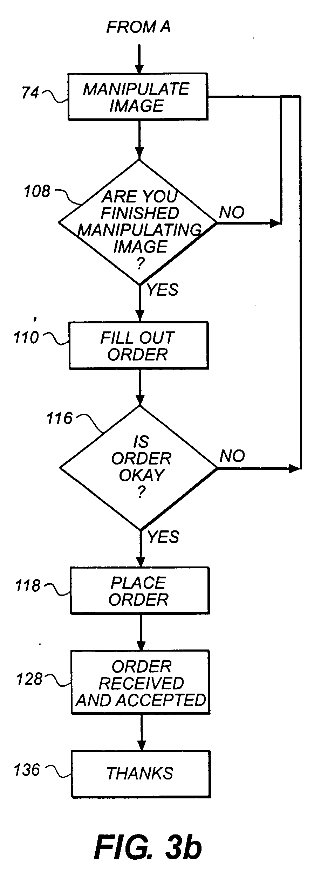

In order to more clearly understand the present invention, a description of the operation of the ordering process for custom postage will be described. Figs. 3a and 3b illustrate a flowchart of the steps of this process and will be used in the following description.

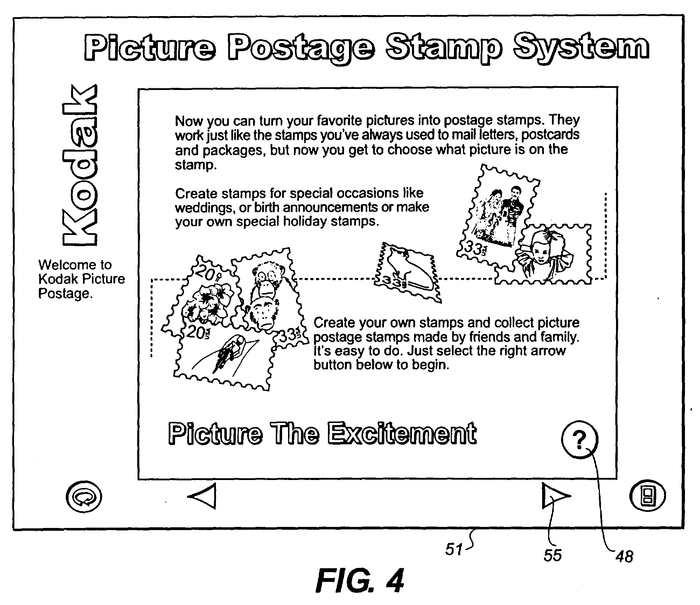

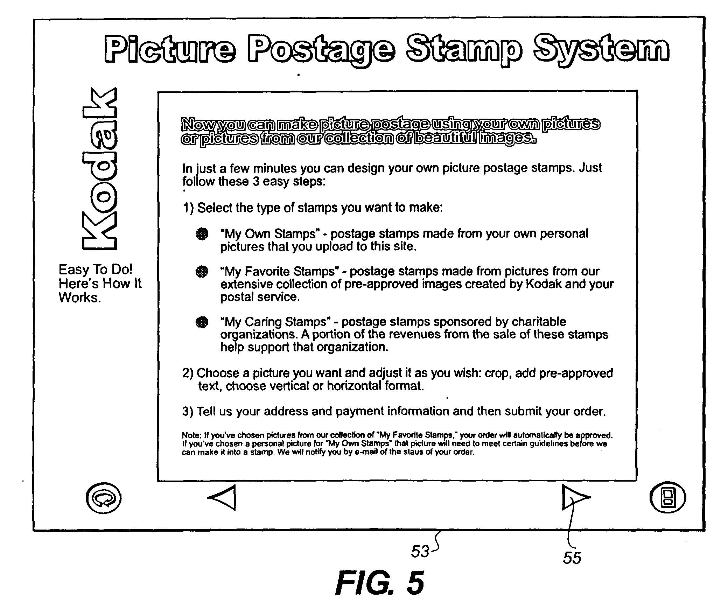

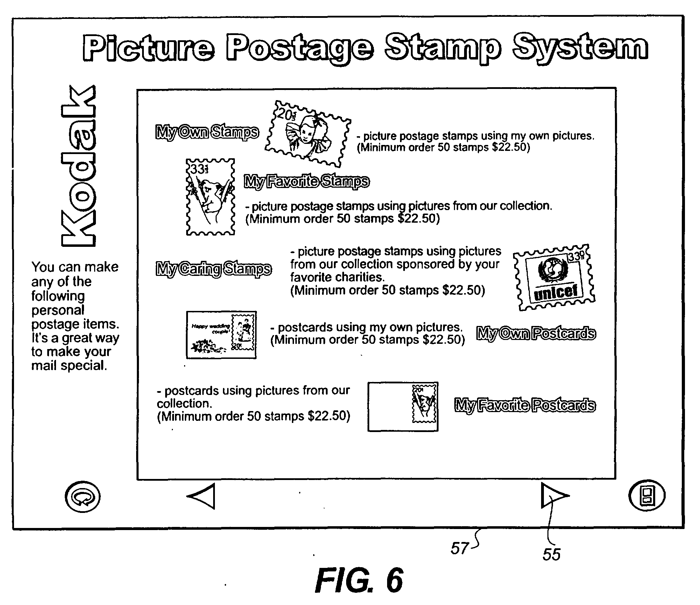

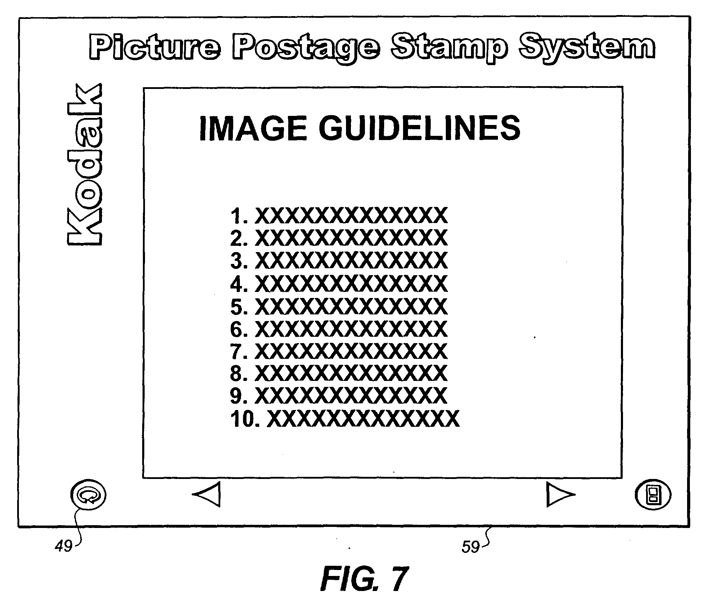

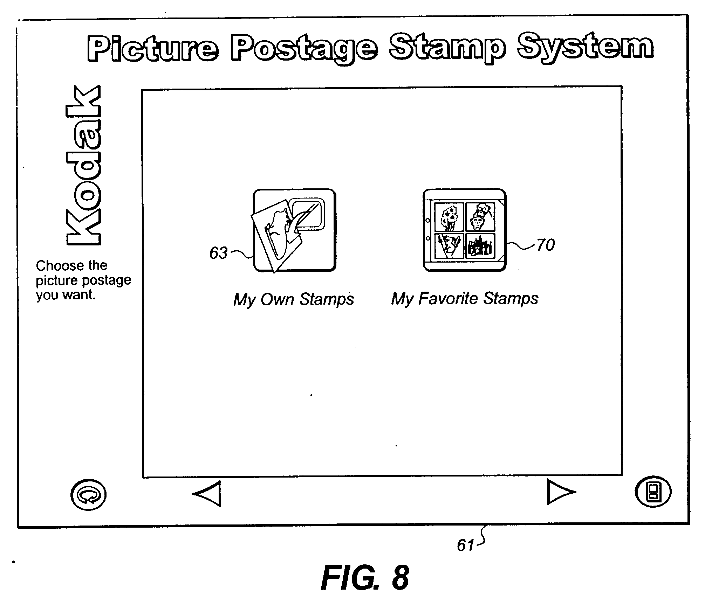

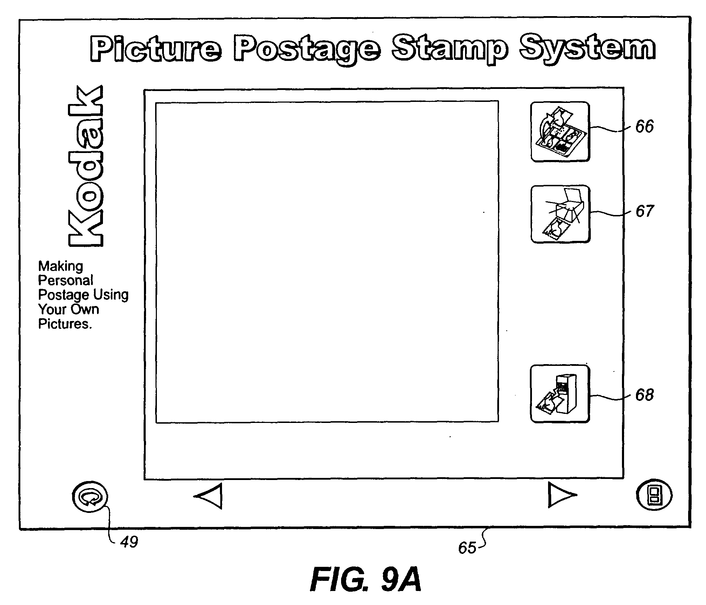

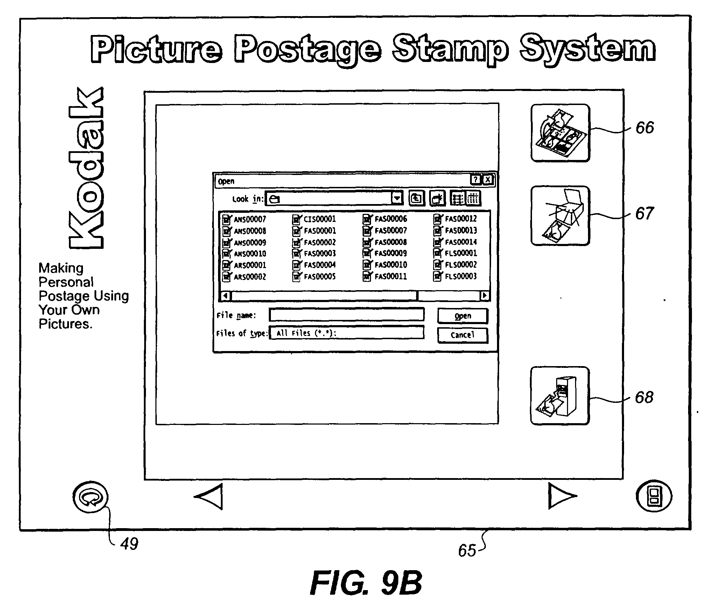

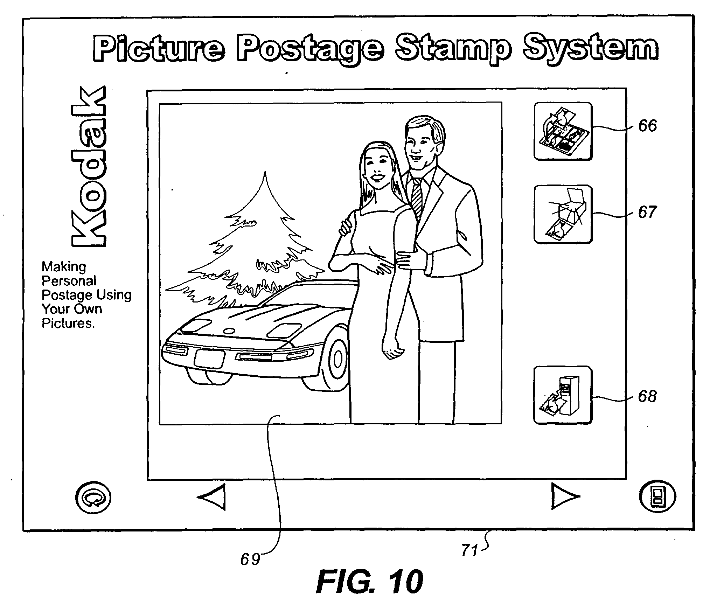

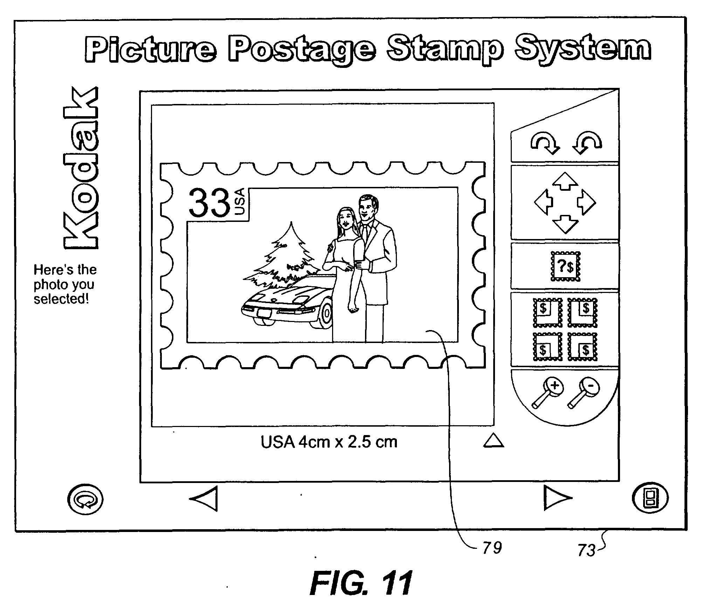

A consumer using a remote ordering system 14, such as a personal computer or kiosk 30, logs onto the central authorizing computer system 12. In the embodiment illustrated, the central authorizing system 12 may be located at a governmental office (such as the official post office), or that of a designee. The ordering process starts with an introduction step 50 which results in introduction screen 51 (Fig. 4) being displayed on the remote display device 21 at the remote computer system 12. The introduction screen 51 explains what creating your own postal product is about. If the consumer wants more information, they select the "?" button 48 on screen 51 and the instruction screen 53 (Fig. 5) appears on the display device 21 and the system 12 leads the process to step 54. The instruction screen 53 explains how the consumer can create customized postage stamps or other postal products having custom images using one of their own images or selecting an image from a gallery of pre-approved images. The consumer then selects the "right arrow" 55 and the product list (step 56), which provides a product list screen 57 (see Fig. 6), which appears on display device 21. The product list screen 57 lists all the types of postage products the consumer can purchase with their customized image incorporated in the postal product. Postal products include, but are not limited to, postage stamps, envelopes, postcards, packages, etc. The consumer then selects the "right arrow" 55 and goes to Guidelines (step 58) where an image guideline screen 59 (Fig. 7) appears on the display device 21. The image guideline screen 59 displays a list of what is appropriate and not appropriate as image content for your personal image to be approved for use on a postal product. The user is then led back to the introduction screen 51 at step 50 by selection of return button 49 and then selects the "right arrow" 55 which takes the user to decision step 60 wherein a decision screen 61 (Fig. 8) appears on the display device 21. The decision screen 61 displays options for the consumer to choose. In the embodiment illustrated, there are two options, however, there may be any desired number of options. The first option is for the consumer to choose one of their own images (step 62) by selecting button 63. When the consumer selects the button 63, the chosen image source screen 65 (Fig. 9a) appears on the display device 21. The selected image source screen (Fig. 9a) displays three buttons 66,67,68. When the consumer selects the "From File" button 66, the consumer is taken to the part of their computer 18 where their files are stored, screen 65, so they can choose to open a file containing one of their images, as illustrated by Fig. 9b. When an image file is selected, it is displayed in the window 69 on the upload screen 71 (Fig. 10). When the consumer selects button 67, the consumer is asked for an external image source such as a flatbed scanner, digital camera, or other such source. When the image 69 is acquired, the image 69 is displayed on the screen 71. When the consumer is satisfied with the image selected, the consumer selects the "Upload" button 68 and the file of the selected image is uploaded (step 72) to authorizing computer system 12 and appears in the window 79 of the image manipulation screen 73 (Fig. 11). The process then goes to step 74. The window 79 may be any desired shape or size consistent with the postal product on which the image is to be placed and is sufficiently large so as to enable the user to view and manipulate the image as discussed later herein. At this point, the authorizing computer system 12 controls further action on the uploaded image.

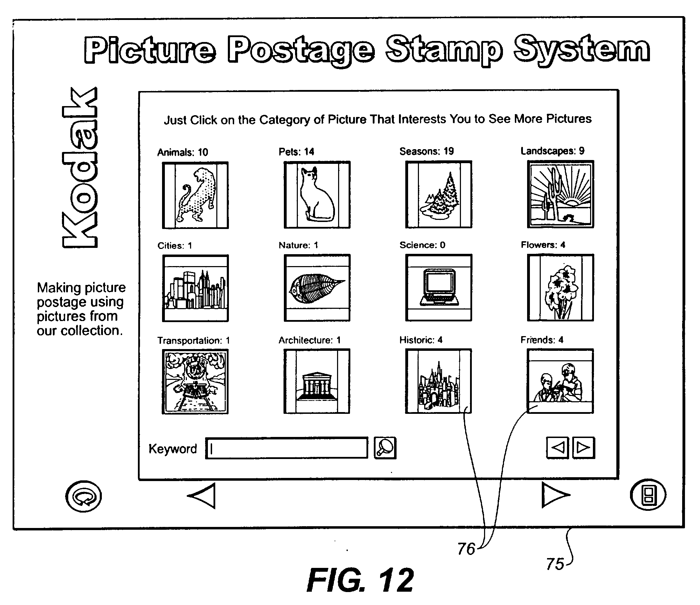

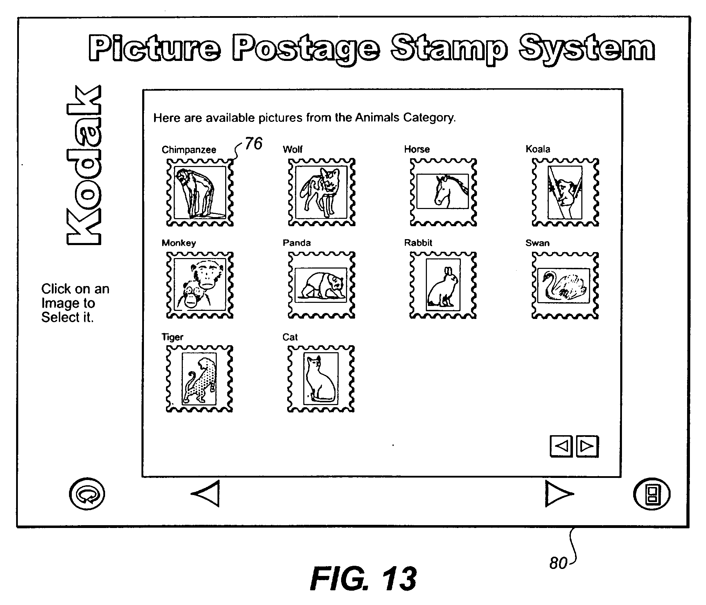

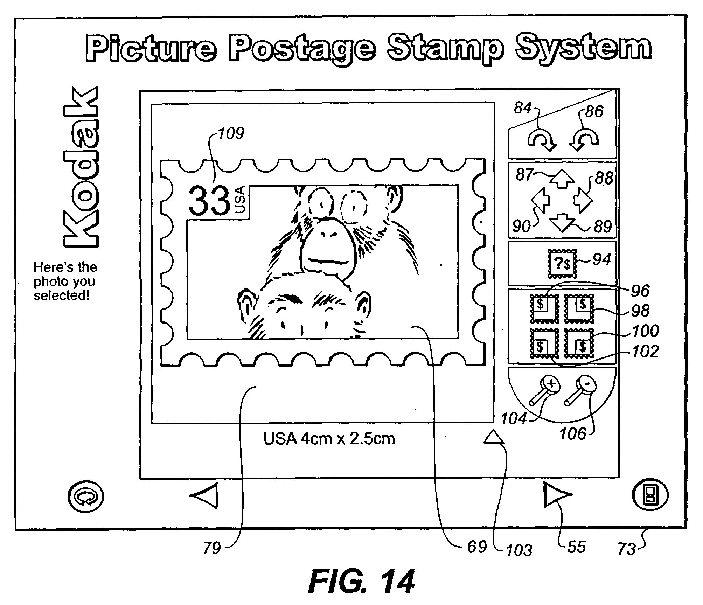

When the consumer selects the "From Collection" button 70 on decision screen 61 (Fig. 8), the process goes to step 74 and the image category screen 75 (Fig. 12) appears on the display device 21. The image category screen 75 displays a plurality of thumbnail-size images 76, which represent different categories of images, such as animals, flowers, landscapes etc. When the consumer selects an image 76 representing a category on the image category screen 75, the consumer goes to step 78, which displays gallery screen 80 (Fig. 13) comprising a plurality of different thumbnail size images 76. For example, if the consumer selects the category "animals," the gallery screen 80 would display thumbnail images of various animals. The consumer chooses an image by selecting the thumbnail of the desired image 76 which results in the selected image appearing in the window of the image manipulation screen 73 (Fig.14). A benefit of using a pre-approved prestored image is that any portion of the image may be used to create a postal product without the need to have the image reviewed for appropriate content.

Various selection buttons are provided on the right side of the image manipulation screen 73 for manipulation of the image, selection of the desired format, and selection of the desired denomination. For example, the consumer can zoom, size, rotate and move the image in the image acceptance window 79, move the location of the denomination of the stamp, change the denomination of the stamp, and select one of the different sizes and/or shapes provided for the stamp. Selection buttons 84 and 86, each time it is selected, rotate the image 90° clockwise or counter-clockwise as indicated by the arrow. Selection buttons 87,88,89,90, each time it is selected, move the image a predetermined incremented amount in the image acceptance window 79 in the direction indicated by the arrow-shaped buttons 87,88,89,90. By providing movement of the image in predetermined increments in the four directions, accurate and simple placement of any desired portion of the image in window 79 can be accomplished by the user. For example, if selection button 90 is selected, the image 69 is moved to the left a predetermined incremental amount. The incremental amount may be any desired amount. Preferably, the amount is such that the image will be moved across the window 79 by selecting selection button 90 a reasonable number of times. If desired, the incremental amount may be divided into two or more modes, for example, normal and fine adjustment modes. In the normal mode, the image would be moved about 5% of the width of the image each time the button is selected, whereas in the fine mode, the image would be moved about 1% of the width of the image each time the button is selected. It is, of course, to be understood that the actual incremental amount may be any desired amount that is deemed appropriate. The other selection buttons 87,88,89 would operate in a similar manner.

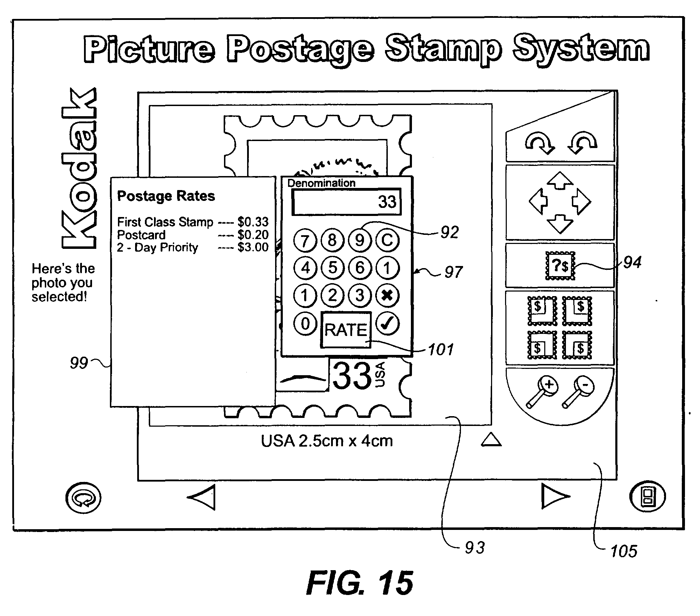

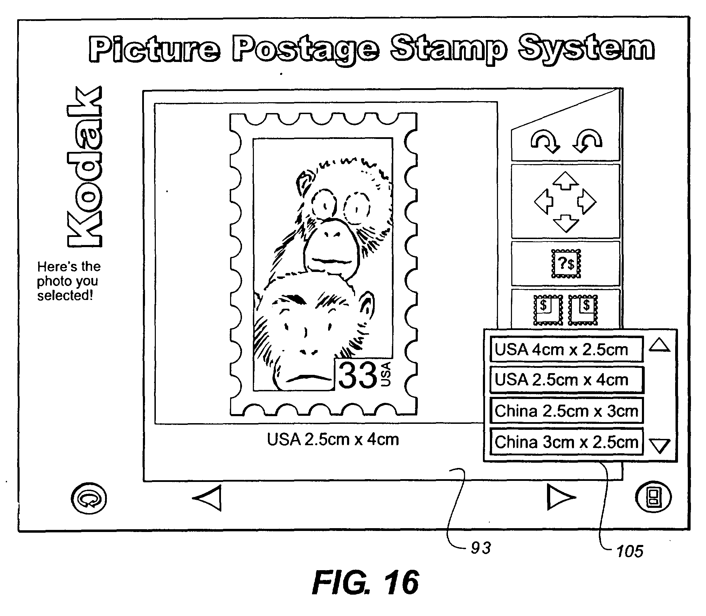

Selection button 94 allows selection of the denomination of the stamp as illustrated by denomination screen 93 (Fig. 15). The desired denomination for the postal product can be selected by entry of the amount by selecting the appropriate selection buttons 92 on denomination calculator 97. Referring to Fig. 15, a drop-down box 99 is provided upon selection of an appropriate selection button 101 on screen 93 which lists the latest postal rate schedule for various postage products. Selection button 103 on screen 73 (Fig. 14) brings down a format selection box 105 on screen 93 (Fig. 16), whereby the desired format of the postal product can be selected. For example, the format selection may comprise the size and shape of the stamp. Any desired shape and/or size format may be provided for selection of any desired postal product, including allowing the user to create any desired shape or size.

It is, of course, understood that the manipulation screen may allow for any other modifications to the postal product desired. For example, but not by way of limitation, text may be added, or the color of the image, or a portion thereof, may be adjusted.

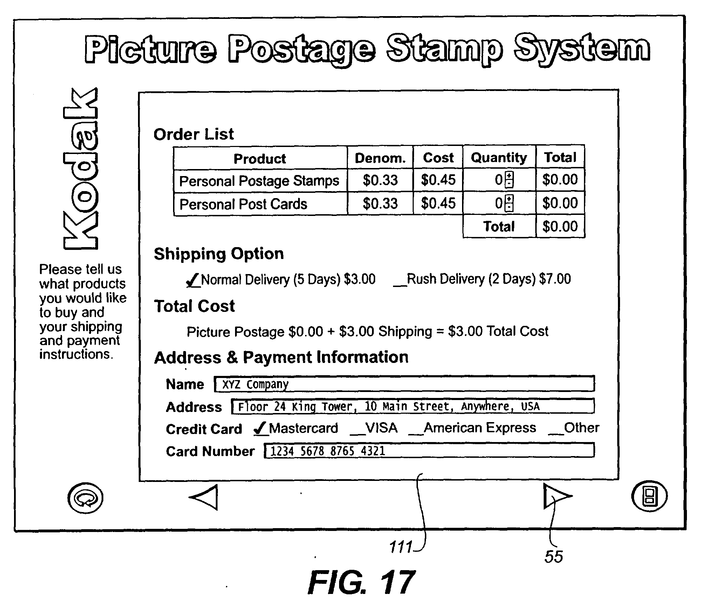

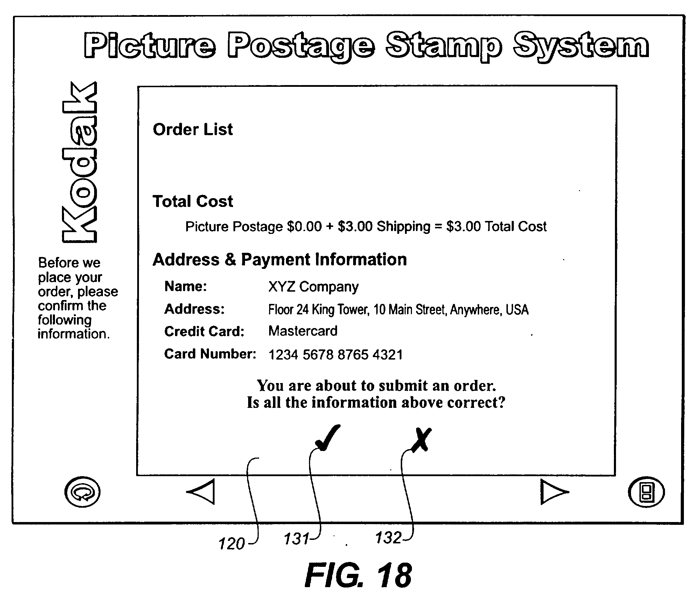

Referring back to Fig. 14, screen 73, selection buttons 96,98,100,102 indicate the position of the denomination 109 on the stamp or other postal product. Selection buttons 104,106 allow for zooming up and reducing the image, respectively. By using buttons 87,88,89,90,104,106, the user can easily select any portion of the desired image for the postal product. Decision step 108 (Fig. 3) illustrates the consumer deciding whether to continue manipulation of the postal product. When the consumer is satisfied with the postal product and the desired manipulation completed, the process continues to step 110. By using an image editing software package, such as Adobe Photoshop, the consumer can also combine a portion of their own image with a prestored image. For example, the consumer can place their family into a picture of the Grand Canyon. By selecting the "right arrow" button 55 on manipulation screen 73 (Fig. 14), the order screen 111 (Fig. 17) is displayed. The order screen 111 lists the products ordered and their costs. The screen 111 also provides entry locations for the filling in of the customer name, address and appropriate credit card information. Screen 111 further allows entry of the customer order, for example, the quantity for each product and a method of delivery. The totals for what has been ordered and the amount charged for delivery are automatically calculated and displayed. After the order is completed, it is first checked by the central authorizing computer system 12 by selection of "right arrow" button 55. If the order is not completed correctly and/or all the required information is not provided, the central authorizing computer system 12 redisplays the order screen 111 at the remote display device 21 with an appropriate message or indicator as to what is incorrect or incomplete. The consumer then corrects the order and the order is resubmitted for further checking. After the order has been checked, then the central authorizing computer 12 displays the submit screen 120 (Fig. 18). This brings the user to decision step 116. If the consumer is satisfied with the order, the consumer selects the " 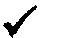 " button 131 causing the order to be submitted to the central authorizing computer system 12 for filling, which places the consumer in the order process to be at step 118 (Fig. 3b). If the user does not like the order, the user selects the "X" button 132 causing the image manipulation screen (Fig. 14) to be displayed, which brings the user back to step 74 in the order process, allowing the consumer to recompose their stamp and change their order in the same manner previously discussed.

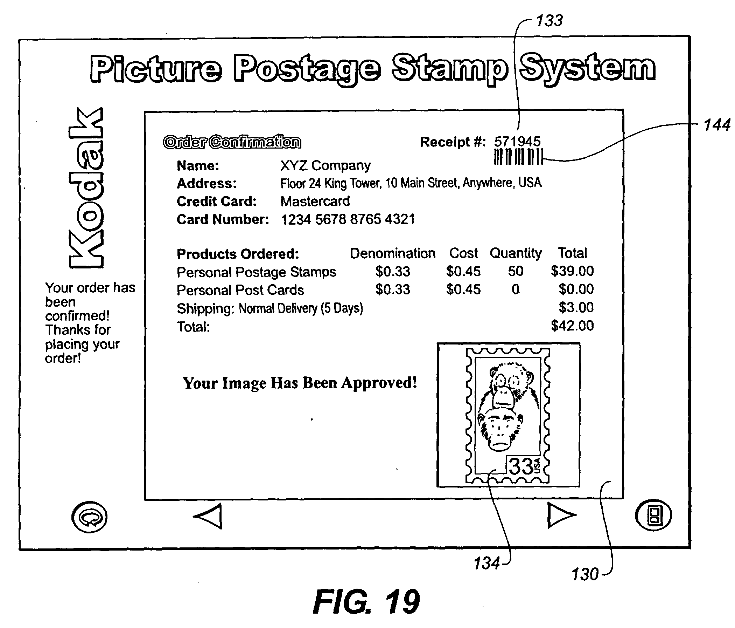

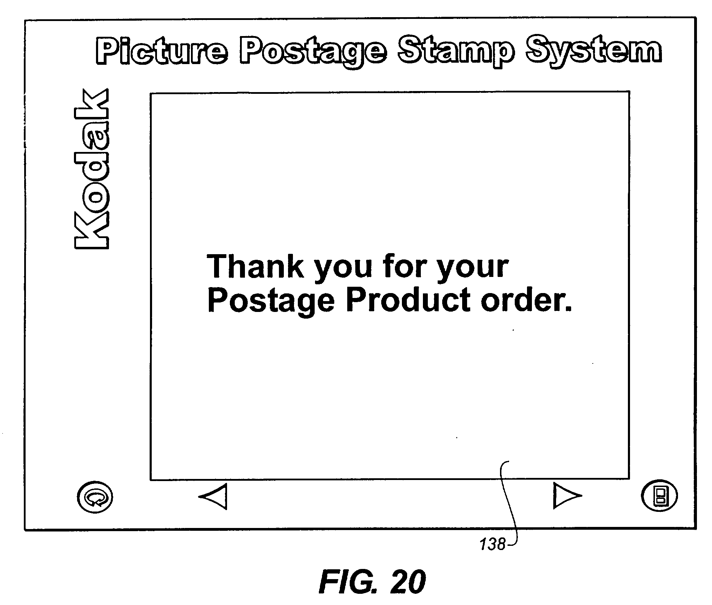

When the submitted order is received by the central authorizing computer system and the order and image have been approved as indicated by step 128 of Fig. 3b, confirmation is electronically sent to the remote computer system 12 causing confirmation screen 130 (Fig. 19) to be displayed on display device 21. The confirmation screen 130 (Fig. 19) displays the order information; the quantity of each product ordered, total cost, name, address, credit card type, credit card number and credit card expiration date. The consumer is also shown a receipt number 133 and an image 134 of the stamp or other postal product displayed on the confirmation screen 130. In addition, a hardcopy receipt can be printed at the remote computer system 12. This can be accomplished by a printer 140. In the case of kiosk 30, the hard receipt is issued through a slot 142. The receipt can include a machine readable code 144, such as a bar code, that can be read by a scanner 146 provided in the kiosk so that the order status can be automatically obtained at the kiosk. Following receipt and acceptance of the order, the consumer is electronically sent a thank you message, step 136 (Fig. 3b), which is displayed as the "Thank You Letter" screen 138 (Fig. 20).

Once the order has been received by the authorizing computer system 12, it may be necessary to have the order reviewed by an individual if it contains images provided by the consumer. If a pre-approved prestored image is used, the central computer system 12 will recognize this, which in most, if not all cases, eliminate the need for further review for content. In the case where review of the order is warranted, the image and/or relevant information is displayed on display device 25. If all meets with the approval of the reviewing individual, the authorizing agent, through the authorizing computer system 12, forwards the order to an appropriate printer 26 where the order is filled. Since the order is being filled at an authorized agency, for example, the governmental post office or its designee, the printer can be provided with appropriate inks, such as fluoresce inks, that allow verification that the postal product in genuine by existing equipment present at current post office facilities. If the order does not meet the requirements of the authorizing agency, for example, the image is offensive, inappropriate, or not suitable for any reason, the order is not approved and an appropriate notice is sent to the remote computer system 14 along with an explanation why the order was not accepted. The consumer can then either withdraw the order or modify, if possible, the order in response to the explanation and resubmit the order.

In the preferred embodiment, the postal product is described as a postage stamp, however, the present invention is not limited to such. For example, but not limited to, envelopes, postcards, commemorative sheets, or other products containing official postage.

An advantage provided by the present invention is that the authorizing computer system 12 controls the manipulation of the image and printing of the order. This removes the need to use an encryption system for verifying the authenticity of the postal product or worry about the content of image being used on the postal product. Additionally, there is no need to update software at remote locations as the software for running the order processing computer program is maintained at the central authorizing computer system 12. Thus, only the software at the central authorizing computer need be updated as the postal rates change, new postal products are developed, or improvements are made to the customizing and ordering process.

The invention has been described in detail with particular reference to certain preferred embodiments thereof, but it will be understood that variations and modifications can be effected within the scope of the invention.

## Claims

1. A system for customizing an official postal product, comprising:
a central authorizing computer system for communicating with at least one remote ordering system over a communication network, said central authorizing computer system having a computer program for forwarding information to said at least one remote ordering system for allowing customizing of an official postal product from said at least one remote ordering system.

2. A system according to claim 1 wherein said information includes instructions on how to modify an image for use on a postal product or for ordering said customized official postal product.

3. A system according to claim 1 wherein said information includes a list of acceptable criteria for image content of images that can be used on said custom official postal product.

4. A method for ordering custom postage having a customized image thereon, comprising the steps of:
a) providing a central authorizing computer system for communication with at least one remote ordering system over a communication network; and
b) providing said central authorizing computer system with a computer program for providing information to said at least one remote ordering system for allowing ordering of custom postage from said at least one remote ordering system.

5. A computer software product for use in ordering custom postage, comprising a computer readable storage medium having a computer program for use in a central authorizing computer system capable of communication with at least one remote ordering system over a communication network, said computer software product which when loaded into authorizing computer system causes the authorizing computer system to perform the step of:
providing said central authorizing computer system with a computer program for forwarding information to said at least one remote ordering system for allowing ordering of custom postage from said at least one remote ordering system.

6. A system for ordering customized postage, comprising:
a central authorizing computer system for communicating with at least one remote ordering system over a communication network, said central authorizing computer system having a computer program for forwarding information to said at least one remote ordering system for allowing custom modification of an image for use on postage.

7. A system for customizing an official postal product, comprising:
a central authorizing computer system for communicating with at least one remote ordering system over a communication network, said central authorizing computer system having a computer program for forwarding information to said at least one remote ordering system for allowing customizing of an official postal product from said at least one remote ordering system, and means for manipulation of the image for use on said official postal product.

8. A system according to claim 50 wherein said means for manipulation of said image comprises at least one selection button for incrementally moving the image a predetermined incremental amount in at least one direction.

9. A system for customizing an official postal product, comprising:
a central authorizing computer system for communicating with at least one remote ordering system over a communication network, said central authorizing computer system having a computer program for forwarding information to said at least one remote ordering system for allowing customizing of an official postal product from said at least one remote ordering system, said central authorizing computer system having at least one prestored image that can be used in a custom official postal product, means for manipulation or use of at least a portion of the prestored image for use on said custom official postal product.

10. A system for customizing an official postal product, comprising:
a central authorizing computer system for communicating with at least one remote ordering system over a communication network, said central authorizing computer system having a computer program for forwarding information to said at least one remote ordering system for allowing customizing of an official postal product from said at least one remote ordering system, said central authorizing computer system having at least one prestored image that can be used in a custom official postal product, means for use of at least a portion of the prestored image for use on said custom official postal product thereby eliminating the need to obtain content approval before producing of said official postal product.
